**Europäisches Patentamt**

**European Patent Office**

**Office européen des brevets**

(19)

(11) Veröffentlichungsnummer: **0 134 915**

**B1**

(12) # EUROPÄISCHE PATENTSCHRIFT

(45) Veröffentlichungstag der Patentschrift:
23.09.87

(21) Anmeldenummer: **84106613.7**

(22) Anmeldetag: **08.06.84**

(51) Int. Cl.⁴: **C 04 B 35/52 //**
**C04B38/06**

(54) **Verfahren zur Herstellung eines Kohlenstofformkörpers.**

(30) Priorität: **01.07.83 DE 3323800**

(43) Veröffentlichungstag der Anmeldung:
**27.03.85 Patentblatt 85/13**

(45) Bekanntmachung des Hinweises auf die Patenterteilung:
**23.09.87 Patentblatt 87/39**

(84) Benannte Vertragsstaaten:
**AT BE CH DE FR GB IT LI LU NL SE**

(56) Entgegenhaltungen:
**DE-A-2 104 680**
**DE-B-2 131 792**

(73) Patentinhaber: **C. CONRADTY NÜRNBERG GmbH & Co. KG, Grünthal 1-6, D-8505 Röthenbach a.d. Pegnitz (DE)**

(72) Erfinder: **Schieber, Franz, Finkengasse 94, D-8505 Röthenbach a.d. Pegnitz (DE)**

(74) Vertreter: **Kern, Wolfgang Dipl.- Ing., Patentanwälte Tischer, Kern & Brehm Albert- Rosshaupter- Strasse 65, D-8000 München 70 (DE)**

EP 0 134 915 B1

## Beschreibung

Die Erfindung betrifft ein Verfahren zur Herstellung eines Kohlenstofformkörpers geringer Rohdichte und hoher Porosität, insbesondere zur Wärmedämmung.

Wärmedämmstoffe sind gewöhnlich hochporöse, leichte Materialien, die eine geringe Wärmeleitfähigkeit aufweisen und den Wärmeübergang durch Konvektion mehr oder weniger stark unterbinden. Zur Wärmedämmung im Hochtemperaturbereich eignet sich im wesentlichen nur Kohlenstoffmaterial, da dieses bekanntlich bis zu höchsten Temperaturen einen geringen Dampfdruck besitzt und erst bei ca. 3500° C sublimiert.

Es ist ein Verfahren zur Herstellung eines plattenförmigen Kohlenstoffkörpers bekannt, der eine Rohdichte von 0,1 bis 0,8 g/cm³, eine Dicke von 0,1 bis 5 mm und ein Verhältnis der Plattenfläche zur Plattendicke von wenigstens $10^5$ aufweist, wobei das organische Material Kohlenstoff- oder Graphitfilz ist, dessen Oberflächen im wesentlichen nur mit dem verkokten bzw. graphitisierten Imprägniermittel überzogen sind (DE-PS 27 24 131).

Die Herstellung derartiger Kohlenstofffilze ist jedoch nicht zuletzt deshalb mit einem erheblichen Aufwand verbunden, weil zunächst die Fasern oder Fäden, aus denen sich derartige Filze zusammensetzen, in Form einer ideal ungeordneten Wirrlage abgelegt und anschließend in bekannter Weise gefilzt und gewalzt werden müssen, so daß Faservliese entstehen, die danach durch Erhitzen in Kohlenstoff bzw. Graphit Obergeführt werden müssen (DE-AS 23 05 105).

Es ist ferner ein Verfahren zur Herstellung eines Kohlenstoffpapiers bekannt, bei dem ein Gemisch aus Kohlenstoffasern, Pulpe, Papierblattbindemittel hergestellt und zu einem Blatt ausgeformt wird, das in einem nachfolgenden Imprägniervorgang mit hochmolekularen Substanzen imprägniert und in einem inerten Gas erhitzt wird, um die organischen Fasern zu carbonisieren (DE-OS 24 32 706). Der Imprägniervorgang geschieht durch Eintauchen des Papierblattes in eine Imprägnier- oder Bindemittellösung, die vollständig in dem Blatt verbleibt und durch nachfolgendes Carbonisieren in ein kohlenstoffhaltiges Bindemittel umgewandelt wird, das die Kohlenstoffasern des Papiers miteinander verbindet. Dieses Verfahren dient in erster Linie dazu, Festigkeit und elektrische Leitfähigkeit des hergestellten Kohlenstoff-Faser-Papiers in dem gewünschten Ausmaß zu stabilisieren. Ein solches Papier eignet sich jedoch aufgrund seiner relativ geringer Porosität nicht nur unzureichend als Wärmedämmstoff, sondern erfordert aufgrund der Tatsache, daß es aus zwei Ausgangsstoffen besteht, nämlich Kohlenstoffasern und Papierstoff, auch einen erheblichen fertigungstechnischen Aufwand.

Die Aufgabe der Erfindung besteht deshalb darin, ein Verfahren der genannten Art zu schaffen, mit dem auf einfache und kostengünstige Weise Kohlenstofformkörper geformt werden können, die allen Anforderungen einer guten Wärmedämmung, insbesondere im Hochtemperaturbereich, entsprechen und darüberhinaus sich so einstellen lassen, daß sie auch im Hinblick auf ihr spezifisches Gewicht und ihre Festigkeit insbesondere zur Isolierung großflächiger, großvolumiger Gegenstände geeignet sind.

Diese Aufgabe wird erfindungsgemäß dadurch gelöst, daß Papierteilchen in Plättchenform mit einem mittleren Durchmesser von 0,5 bis 5 mm und einer mittleren Dicke von 0,01 bis 1 mm und/oder in Streifenform mit einer mittleren Länge von 5 bis 100 mm, einer mittleren Breite von 0,5 bis 10 mm und einer mittleren Dicke von 0,01 bis 1 mm, die einen Aschegehalt von 0,005 bis 5 % aufweisen, mit einem kohlenstoffhaltigen Bindemittel imprägniert werden, daß die Papierteilchen danach zu einem Körper geformt werden und dieser Körper dann Temperaturbehandlungen zur Kondensation, Carbonisierung und gegebenenfalls Graphitierung unterworfen wird.

Erfindungsgemäß wird demnach ein Kohlenstofformkörper aus carbonisierten und/oder graphitierten Papierteilchen in Blättchenform oder Streifenform o.dgl. hergestellt, wobei die Papierteilchen auch Abfallstoffe der Papierindustrie o.dgl. sein können, sofern die Abfallpapiere vor der Carbonisierung einen Aschegehalt von 0,005 bis 5 % besitzen.

Gemäß einer vorteilhaften Weiterbildung des Verfahrens nach der Erfindung lassen sich die Papierteilchen nach ihrer mit einem kohlenstoffhaltigen Bindemittel erfolgten Imprägnierung zunächst carbonisieren und danach einer weiteren Imprägnierung unterwerfen, bevor sie zu einem Körper geformt werden, der dann zum Zwecke der Kondensation, Carbonisierung und gegebenenfalls Graphitierung die erforderliche Temperaturbehandlung erfährt.

Der wesentliche Gedanke der Erfindung ist somit der Einsatz von carbonisierten Papierteilchen mit in relativ weiten Grenzen wählbaren Abmessungen, wie sie oftmals auch als Abfallstoffe zur Verfügung stehen, und die mit organischen Stoffen imprägniert oder beschichtet sind.

Für das Verfahrenserzeugnis, nämlich die Kohlenstofformkörper, ergeben sich nicht nur Verwendungsmöglichkeiten als Wärmedämmkörper, sondern auch als Füllkörper für Destillationskolonnen und Ionenaustauscher sowie als Absorptionsmittel, beispielsweise zur Entfärbung und Filtration von Flüssigkeiten und Gasen.

Das erfindungsgemäße Verfahren wird anhand der beiden folgenden Ausführungsbeispiele näher erläutert.

## Beispiel 1

Aus aschearmen Filterpapier mit einem Aschegehalt von 0,16 % wurden mit Hilfe eines Reißwolfes Streifen von ca. 2 mm Breite erzeugt. Die durchschnittliche Länge der Streifen betrug ca. 100 mm. Die Streifen wurden in eine 50 %ige Methanolharzlösung getaucht und dabei imprägniert. Das Lösungsmittel Methylalkohol wurde durch Stehenlassen an der Luft aus den Papierstreifen durch Verdunstung entfernt. Die lufttrockenen Streifen wurden zu einem plattenförmigen Körper von 250 x 140 x 20 mm durch leichten Druck abgeformt und in der Form in einem Trockenschrank bis 150° C einer Kondensationsbehandlung unterworfen. Die Körper wurden dann in bekannter Weise bis 900° C carbonisiert. Sie hatten nach dieser Behandlung eine Rohdichte von ca. 0,3 g/cm und eine Porosität von ca. 70 %.

## Beispiel 2

Papierstreifen gemäß Beispiel 1 wurden mit einer 50 %igen Methanolharzlösung durch Tauchen imprägniert. Nach Verdunstung des Lösungsmittels wurden die Streifen in einem Kohletiegel bis 900° C unter Luftabschluß carbonisiert. Die leicht verklebten, carbonisierten Teilchen wurden durch schwachen Druck zu plättchenförmigen Kohlenstoffteilchen mit den Zirkamaßen 3 x 3 x 0,1 mm zerkleinert. Dieses Pulver wurde nun erneut mit einer 50 %igen Methanolharzlösung imprägniert. Nach Abdunsten des Lösungsmittels wurde aus dem schwach klebrigen Haufwerk ein rohrförmiger Körper mit einem Außendurchmesser von 70 mm, einem Innendurchmesser von 40 mm und einer Höhe von 50 mm geformt und in der Form durch eine Temperaturbehandlung bis 150° C kondensiert. Der dann bereits feste Körper wurde in üblicher Weise bei 1100° C carbonisiert. Der so erzeugte Kohlenstoffformkörper hatte eine Rohdichte von 0,5 g/cm$^3$ und eine Porosität von ca. 60 %.

## Patentansprüche

1. Verfahren zur Herstellung eines Kohlenstoffformkörpers geringer Rohdichte und hoher Porosität, insbesondere zur Wärmedämmung, dadurch gekennzeichnet, daß Papierteilchen in Plättchenform mit einem mittleren Durchmesser von 0,5 bis 5 mm und einer mittleren Dicke von 0,01 bis 1 mm und/oder in Streifenform mit einer mittleren Länge von 5 bis 100 mm, einer mittleren Breite von 0,5 bis 10 mm und einer mittleren Dicke von 0,01 bis 1 mm, die einen Aschegehalt von 0,005 bis 5 % aufweisen, mit einem kohlenstoffhaltigen Bindemittel imprägniert werden, daß die Papierteilchen danach zu einem Körper geformt werden und daß dieser Körper dann Temperaturbehandlungen zur Kondensation, Carbonisierung und gegebenenfalls Graphitierung unterworfen wird.

2. Verfahren nach Anspruch 1, dadurch gekennzeichnet, daß die Papierteilchen nach ihrer mit einem kohlenstoffhaltigen Bindemittel erfolgten Imprägnierung zunächst carbonisiert und danach einer weiteren Imprägnierung unrerworfen werden, bevor sie zu einem Körper geformt und den Temperaturbehandlungen unterworfen werden.

## Claims

1. Method for providing a shaped carbon article of low bulk density and high porosity, especially for heat insolating purposes, characterized by providing paper particles in plate like form having an average diameter of from 0.5 to 5 mm and an average thickness of from 0.01 to 1 mm and/or in strip form having an average length of from 5 to 100 mm, an average width of from 0.5 to 10 mm and an average thickness of from 0.01 to 1 mm, the paper particles having an ash content of from 0.005 to 5 % per weight, impregnating the paper particles with a carbon-containing binder, shaping the paper particles to form an article, and subjecting the article to temperature treatments for condensation, carbonization and, as the case may be, graphitization.

2. The method according to claim 1, characterized by at first carbonizing the paper particles after their impregnation with a carbon-containing binder and, thereafter, subjecting them to a further impregnation, before they are shaped to form an article and subjecting them to the temperature treatments.

## Revendications

1. Procédé de fabrication d'un corps moulé en carbone de faible masse volumique apparente et de forte porosité destiné en particulier à des applications d'isolation thermique, caractérisé en ce qu'il consiste à réaliser des pastilles da papier d'un diamètre moyen de 0,5 à 5 mm et d'une épaisseur moyenne de 0,01 à 1 mm, et/ou das bandelettes de papier d'une longueur moyenne de 5 à 100 mm, d'une largeur moyenne de 0,5 à 10 mm et d'une épaisseur moyenne de 0,01 à 1 mm, pastilles ou bandes ayant une teneur en cendres de 0,005 à 5 %, à les imprégner d'un liant contenant du carbone, ces fragmants de papier étant moulés en un corps qui est ensuite soumis à des traitaments thermiques de condensation, de carbonisation et, le cas échéant, de graphitisation.

2. Procédé suivant la revendication 1, caractérisé en ce que les fragments de papier, après imprégnation par un liant contenant du carbone, sont alors carbonisés et ensuite soumis à une nouvelle imprégnation, avant d'être moulés en forme de corps et de subir les traitements thermiques nécessaires.